# EUROPÄISCHE PATENTANMELDUNG

(11) **EP 3 943 761 A1**
(43) Veröffentlichungstag der Anmeldung: **26.01.2022**
(21) Anmeldenummer: 21191323.1
(22) Anmeldetag: 08.04.2020
(51) Int. Cl.: F16B 2/08, F16B 2/20, F16B 5/00, B60J 1/00, B60J 10/30, F16B 1/00

(54) **BEFESTIGUNGSANORDNUNG**

(30) Priorität: 22.05.2019 DE 102019113620
(62) Teilanmeldung aus: 20719962.1
(71) Anmelder: Elkamet Kunststofftechnik GmbH, 35216 Biedenkopf (DE)
(72) Erfinder: Roth, Hartmut, 35216 Biedenkopf (DE)
(74) Vertreter: DREISS Patentanwälte PartG mbB

(57) **Zusammenfassung**

Die Erfindung betrifft eine Befestigungsanordnung (10), umfassend ein erstes Bauteil (12), das wiederholbar lösbar an einem zweiten Bauteil (14) befestigbar ist, ferner ein um ein Schwenkgelenk verschwenkbares Zusatzteil (38), das zwischen einer offenen Funktionsstellung, in welcher ein Fügeabschnitt (16) des ersten Bauteils (12) mit einem Aufnahmeabschnitt (22) des zweiten Bauteils (14) fügbar ist, und einer geschlossenen Funktionsstellung, in welcher der Fügeabschnitt (16) des ersten Bauteils in dem Aufnahmeabschnitt (22) des zweiten Bauteils (14) aufgenommen ist, verschwenkbar ist, wobei das Zusatzteil (38) bei einer Überführung zwischen den Funktionsstellungen eine instabile Totpunktstellung durchläuft.

## Beschreibung

Die Erfindung betrifft eine Befestigungsanordnung, umfassend ein erstes Bauteil und ein zweites Bauteil, wobei das erste Bauteil wiederholbar lösbar an dem zweiten Bauteil befestigbar ist.

Der vorliegenden Erfindung liegt die Aufgabe zugrunde, eine preiswerte, einfach aufgebaute sowie werkzeuglos betätigbare Befestigungsanordnung bereitzustellen.

Diese Aufgabe wird bei einer Befestigungsanordnung der eingangs genannten Art gelöst durch ein um ein Schwenkgelenk verschwenkbares Zusatzteil, das zwischen einer offenen Funktionsstellung, in welcher ein Fügeabschnitt des ersten Bauteils mit einem Aufnahmeabschnitt des zweiten Bauteils fügbar ist, und einer geschlossenen Funktionsstellung, in welcher der Fügeabschnitt des ersten Bauteils in dem Aufnahmeabschnitt des zweiten Bauteils aufgenommen ist, verschwenkbar ist, wobei das Zusatzteil bei einer Überführung zwischen den Funktionsstellungen eine instabile Totpunktstellung durchläuft.

Die erfindungsgemäße Befestigungsanordnung weist einen besonders einfachen Aufbau auf, bei welchem es die Verschwenkbarkeit eines Zusatzteils ermöglicht, zwischen zwei definierten Funktionsstellungen zu wechseln. Eine erste Funktionsstellung ist eine offene Funktionsstellung, in welcher ein Fügeabschnitt des ersten Bauteils mit einem Aufnahmeabschnitt des zweiten Bauteils fügbar ist. Eine zweite Funktionsstellung ist eine geschlossene Funktionsstellung, in welcher der Fügeabschnitt des ersten Bauteils in dem Aufnahmeabschnitt des zweiten Bauteils aufgenommen ist. Bei einer Überführung zwischen den beiden Funktionsstellungen durchläuft das Zusatzteil eine Zwischenstellung in Form einer instabilen Totpunktstellung. Dies hat zur Folge, dass das Zusatzteil weder bei einer Überführung aus der offenen Funktionsstellung in die geschlossene Funktionsstellung noch bei einer Überführung aus der geschlossenen in die offene Funktionsstellung in der genannten Zwischenposition verbleibt. Aufgrund der Instabilität der Totpunktstellung wird das Zusatzteil entweder in Richtung der offenen Funktionsstellung oder in Richtung der geschlossenen Funktionsstellung gedrängt.

Ein Monteur nimmt eine instabile Totpunktstellung des Zusatzteils als Widerstand war, dessen Überwindung zu einer Überführung in die jeweils andere Funktionsstellung führt.

In der geschlossenen Funktionsstellung sind zwischen dem ersten Bauteil und dem zweiten Bauteil wirkende Fügekräfte vorzugsweise unabhängig von der Montagekraft. Die Montagekraft muss lediglich ausreichend hoch sein, um eine mit der Totpunktstellung des Zusatzteils korrespondierende maximale Montagekraft zu überwinden. Ob ein Monteur dabei aber lediglich geringfügig höhere Montagekräfte oder aber deutlich höhere Montagekräfte anwendet, hat auf die in der geschlossenen Funktionsstellung des Zusatzteils wirkenden Fügekräfte, und somit auf die Qualität der Montage, keinen Einfluss.

Durch die instabile Totpunktstellung des Zusatzteils wird einem Monteur auch eine haptische und/oder taktile Rückmeldung gegeben, dass ausgehend von einer der beiden Funktionsstellungen eine Totpunktstellung erreicht und überwunden ist.

Eine besonders bevorzugte Ausführungsform der Erfindung sieht vor, dass das Schwenkgelenk durch einen konvexen Gelenkabschnitt des Zusatzteils und einen konkaven, umfangsseitig offenen Gelenkabschnitt des zweiten Bauteils gebildet ist, wobei die Gelenkabschnitte aneinander anliegen. Hierdurch wird eine besonders einfache, verschwenkbare Anordnung geschaffen, welche lediglich flächig aneinander anliegende Gelenkabschnitte des Zusatzteils und des zweiten Bauteils umfasst, wobei die Gelenkabschnitte gemeinsam ein Reibungsgelenk bilden (vergleichbar einem Scharniergelenk oder auch einem menschlichen Ellenbogengelenk). Es genügt, dass sich der konvexe Gelenkabschnitt des Zusatzteils an dem konkaven Gelenkabschnitt des zweiten Bauteils abstützen kann und dass das Zusatzteil an dem konkaven Gelenkabschnitt des zweiten Bauteils verschwenkbar angeordnet ist, wobei der Schwenkwinkel vorzugsweise auf einen maximalen Schwenkwinkel von bspw. 90°, weiter bevorzugt von 60°, begrenzt ist.

Vorzugsweise ist ein Krümmungsradius des Gelenkabschnitts des Zusatzteils kleiner oder gleich einem Krümmungsradius des Gelenkabschnitts des zweiten Bauteils. Bei zumindest annähernd gleichen Krümmungsradien wird eine Kontaktfläche zwischen den Gelenkabschnitten vergrößert, sodass eine besonders verschleißarme und stabile Anordnung geschaffen wird. Wenn der Krümmungsradius des Gelenkabschnitts des Zusatzteils kleiner ist als der Krümmungsradius des Gelenkabschnitts des zweiten Bauteils, ist es möglich, Zusatzteile mit identischer Geometrie für zweite Bauteile mit voneinander abweichenden Geometrien zu verwenden.

Bevorzugt ist es ferner, dass der Gelenkabschnitt des Zusatzteils durch einen im Querschnitt teilkreisförmigen Vorsprung gebildet ist. Dies ermöglicht einen einfachen, kompakten und stabilen Aufbau des Schwenkgelenks.

Die Gelenkabschnitte erstrecken sich in Schwenkrichtung des Zusatzteils gesehen über einen Winkel, der kleiner ist als 360°, vorzugsweise kleiner als 240°.

Es ist möglich, dass sich die Gelenkabschnitte in Schwenkrichtung des Zusatzteils gesehen über einen Winkel erstrecken, der größer als 180° Grad ist. Auf diese Weise kann eine hinterschnittartige Anordnung geschaffen werden, welche eine Festlegung des Zusatzteils im Bereich des Schwenkgelenks an dem zweiten Bauteil ermöglicht.

Das Zusatzteil weist vorzugsweise zwei zueinander winklig angeordnete Schenkel auf. Das vorstehend diskutierte Schwenkgelenk ist vorzugsweise in oder an einem Bereich angeordnet, der die beiden Schenkel miteinander verbindet. Die Schenkel können insbesondere nachfolgend diskutierte Funktionen realisieren.

Es ist beispielsweise möglich, dass die Schenkel in einem entspannten Ruhezustand des Zusatzteils einen ersten Spreizwinkel begrenzen und in mindestens einem Überführungszustand zwischen offener und geschlossener Funktionsstellung des Zusatzteils einen im Vergleich zu dem ersten Spreizwinkel vergrößerten zweiten Spreizwinkel. Auf diese Weise kann eine federelastische Verformbarkeit des Zusatzteils genutzt werden, um in dem Überführungszustand Verformungsenergie in das Zusatzteil einzuleiten, welche bei der und/oder zur Überführung des Zusatzteils aus dessen instabiler Totpunktstellung in eine der beiden Funktionsstellungen freigebbar ist.

Besonders bevorzugt ist es, wenn der vorstehend genannte Überführungszustand mit der Totpunktstellung des Zusatzteils korrespondiert. Auf diese Weise ist eine Montagekraft, die für ein maximales Aufspreizen der Schenkel erforderlich ist, für einen Monteur als maximaler Widerstand spürbar. Dieser Zustand geht insbesondere damit einher, dass der Fügeabschnitt des ersten Bauteils gleichzeitig an beiden Schenkeln des Zusatzteils anliegt. Ein Monteur kann also das erste Bauteil und dessen Fügeabschnitt handhaben und spreizt im Zuge der Handhabung des ersten Bauteils die beiden Schenkel mit Hilfe des Fügeabschnitts des ersten Bauteils auf.

Bei einer bevorzugten Ausführungsform erstreckt sich ein Schenkel des Zusatzteils im Querschnitt gesehen in einer im Wesentlichen geraden Ebene. Ein solcher Schenkel ist insbesondere dazu geeignet, in der geschlossenen Funktionsstellung an einer Begrenzungsfläche des Aufnahmeabschnitts des zweiten Bauteils anzuliegen.

Ferner ist es bevorzugt, dass ein Schenkel des Zusatzteils im Querschnitt gesehen einen gekrümmten Verlauf aufweist. Hierbei handelt es sich insbesondere um einen Schenkel, der in einer offenen Funktionsstellung des Zusatzteils relativ zu dem ersten Bauteil bewegbar ist und in der geschlossenen Funktionsstellung vorzugsweise formschlüssig mit dem ersten Bauteil zusammenwirkt.

Bevorzugt ist es ferner, dass ein freies Ende eines Schenkels des Zusatzteils in der geschlossenen Funktionsstellung des Zusatzteils in einem Hinterschnittbereich des ersten Bauteils und/oder des Fügeabschnitts aufgenommen ist. Der Hinterschnittbereich kann beispielsweise durch einen Abschnitt des Fügeabschnitts des ersten Bauteils begrenzt oder definiert sein. Insbesondere ist der Hinterschnittbereich zwischen einem Teilabschnitt einer dem zweiten Bauteil zugewandten Begrenzungsfläche des ersten Bauteils und einem Aufweitungsabschnitt des Fügeabschnitts angeordnet. Es ist aber auch möglich, dass der Hinterschnittbereich von dem Fügeabschnitt separat bereitgestellt ist oder auch gemeinsam durch den Fügeabschnitt und durch einen von dem Fügeabschnitt separaten Abschnitt des ersten Bauteils.

Zur Definition der Funktionsstellung des Zusatzteils ist es bevorzugt, wenn das zweite Bauteil einen Anlageabschnitt aufweist, welcher in der geschlossenen Funktionsstellung als Schwenkwegbegrenzung wirksam ist und/oder wenn das zweite Bauteil einen Anlageabschnitt aufweist, welcher in der offenen Funktionsstellung des Zusatzteils als Schwenkwegbegrenzung wirksam ist.

Bei dem in der geschlossenen Funktionsstellung wirksamen Anlageabschnitt kann es sich beispielsweise um eine Begrenzungsfläche des Aufnahmeabschnitts des zweiten Bauteils handeln. Eine solche Begrenzung erstreckt sich insbesondere in einer geraden Ebene, welche in der geschlossenen Funktionsstellung des Zusatzteils mit einer hierzu komplementären geraden Ebene des Zusatzteils zusammenwirkt, beispielsweise gebildet durch einen Schenkel, der sich im Querschnitt gesehen in einer im Wesentlichen geraden Ebene erstreckt.

Eine Weiterentwicklung sieht vor, dass das zweite Bauteil mindestens eine Halteeinrichtung aufweist, welche eine Haltekraft zum Halten des Zusatzteils in der offenen Funktionsstellung erzeugt. Diese Haltekraft definiert die offene Funktionsstellung des Zusatzteils als Vorzugsstellung relativ zu dem zweiten Bauteil, solange keine Interaktion mit dem ersten Bauteil stattfindet. Auf diese Weise wird das Zusatzteil in der offenen Funktionsstellung gehalten; ein Fügen des ersten Bauteils geht damit einher, dass zusätzlich zu den vorstehend diskutierten Montagekräften auch die Haltekraft der Halteeinrichtung überwunden werden muss. Diese Haltekraft kann jedoch relativ gering sein, beispielsweise indem eine vergleichsweise schwache Feder verwendet wird, welche sich einenends an dem zweiten Bauteil und anderenends an dem Zusatzteil abstützt und dieses in Richtung der offenen Funktionsstellung drängt. Es ist auch möglich, das Zusatzteil in der offenen Funktionsstellung zu halten, indem die Halteeinrichtung miteinander magnetisch zusammenwirkende Abschnitte aufweist, welche in der offenen Funktionsstellung des Zusatzteils miteinander zusammenwirken, jedoch in der geschlossenen Funktionsstellung des Zusatzteils einen vernachlässigbaren Einfluss haben.

Erfindungsgemäß ist es möglich, dass genau ein Zusatzteil vorgesehen ist, wodurch eine besonders einfach aufgebaute und robuste und kompakte Befestigungsanordnung geschaffen werden kann. Es ist aber auch möglich, dass zwei Zusatzteile vorgesehen sind, welche zwischen ihren jeweiligen Funktionsstellungen jeweils in zwei zueinander entgegengesetzten Schwenkrichtungen bewegbar sind. Dies ermöglicht eine Vergleichmäßigung von Montagekräften beidseits und symmetrisch zu einer Montageebene. Die beiden vorstehenden Angaben "genau ein Zusatzteil" bzw. "zwei Zusatzteile" beziehen sich jeweils auf einen Querschnitt der Befestigungsanordnung, der senkrecht zu einer Schwenkachse des genau einen Zusatzteils bzw. senkrecht zu jeweiligen Schwenkachsen der zwei Zusatzteile orientiert ist. Dies bedeutet, dass entlang der Schwenkachse gesehen oder der Schwenkachsen gesehen auch mehrere Zusatzteile vorgesehen sein können.

Es ist möglich, dass die beiden Zusatzteile voneinander getrennt angeordnet sind und sich unabhängig von ihren jeweiligen Funktionsstellungen nicht berühren. Es ist aber auch möglich, dass die beiden Zusatzteile mittels eines Verbindungsabschnitts miteinander verbunden sind, sodass die beiden Zusatzteile miteinander bewegungsgekoppelt sind. Ein solcher Verbindungsabschnitt kann separat von den Zusatzteilen bereitgestellt sein und beispielsweise aus einem vorzugsweise federelastischen metallischen Material hergestellt sein. Der Verbindungsabschnitt kann aber auch aus einem Kunststoff, einem Elastomer oder einem Faserkunststoffverbundmaterial bestehen. In diesem Fall ist eine einstückige Ausbildung mit zumindest einem Zusatzteil, vorzugsweise mit beiden Zusatzteilen bevorzugt. Bei zwei aus Kunststoff bestehenden Zusatzteilen kann der Verbindungsabschnitt auch in Form eines Filmscharniers ausgeführt sein. Derartige Anordnungen sind oder werden vorzugsweise im Extrusions- oder Co-Extrusionsverfahren hergestellt. Auch eine Herstellung in einem Spritzgussverfahren ist möglich.

Es ist möglich, dass der Verbindungsabschnitt nicht nur für eine Überführung zwischen den Funktionsstellungen verformbar ist, sondern vorzugsweise eine noch stärker ausgeprägte Verformbarkeit aufweist, beispielsweise um einen Verbund aus zwei Zusatzteilen und einem Verbindungsabschnitt in einen Aufnahmeabschnitt des zweiten Bauteils einführen zu können. In diesem Zusammenhang ist eine insbesondere blattförmige, reversibel biegbare oder knickfähige Ausbildung des Verbindungsabschnitts besonders bevorzugt, welche es dem Verbund gestattet, vorübergehend eine zum Einführen des Verbundes durch eine Eingriffsöffnung in den Aufnahmeabschnitt des zweiten Bauteils erforderliche kompakte Einführkonfiguration einzunehmen, in welcher der Verbindungsabschnitt stark deformiert, insbesondere gebogen oder geknickt ist.

Für den Fall, dass ein vorstehend genannter Verbindungsabschnitt vorgesehen ist, ist es bevorzugt, dass die Totpunktstellung der beiden Zusatzteile mit einer maximalen Komprimierung, Stauchung und/oder Druckbelastung des Verbindungsabschnitts einhergeht.

Für alle vorstehend beschriebenen Befestigungsanordnungen gilt, dass ausgehend aus einem Montagezustand, in welchem das mindestens eine Zusatzteil seine geschlossene Funktionsstellung einnimmt, das erste Bauteil auch wieder von dem zweiten Bauteil getrennt werden kann. Hierbei wird das mindestens eine Zusatzteil um das Schwenkgelenk herum ausgehend aus seiner geschlossenen Funktionsstellung in die offene Funktionsstellung verschwenkt. Auch hierbei durchläuft das Zusatzteil die genannte Totpunktstellung.

Die erfindungsgemäße Befestigungsanordnung eignet sich insbesondere für Prismenanordnungen, bei denen das erste Bauteil und/oder das zweite Bauteil prismenförmig ist oder sind, beispielsweise für Profile, Leisten oder Paneele.

In entsprechender Weise ist es bevorzugt, dass das Zusatzteil prismenförmig ist. Dies ermöglicht es, entlang der Erstreckung des Zusatzteils Montagekräfte zwischen dem ersten Bauteil und dem zweiten Bauteil bereitzustellen.

Bei einer bevorzugten Befestigungsanordnung erstrecken sich das erste Bauteil, das zweite Bauteil und das Zusatzteil längs einer Haupterstreckungsachse, die zu einer Schwenkachse des Schwenkgelenks parallel verläuft, wobei die Haupterstreckungsachse mindestens 5 cm, vorzugsweise mindestens 10 cm, weiter vorzugsweise mindestens 100 cm lang ist.

Besonders bevorzugt ist das zweite Bauteil eine Nutenleiste oder weist eine Nutenleiste auf. Bei einer solchen Nutenleiste kann es sich beispielsweise um ein Profilelement handeln, das im Maschinenbau oder Gerätebau als Konstruktionsprofil verwendet wird (beispielsweise ein sogenanntes "ITEM"-Profil der item Industrietechnik GmbH, Solingen, Deutschland, oder ein sogenanntes "BOSCH"-Profil der Bosch Rexroth AG, Lohr am Main, Deutschland).

Bei einer besonders bevorzugten Ausführungsform ist das zweite Bauteil eine Profilleiste zur dauerhaften Verbindung mit einer in Einbaulage unteren Berandung einer Windschutzscheibe eines Kraftfahrzeuges, wobei das erste Bauteil vorzugsweise eine Wasserkastenabdeckung zur lösbaren Verbindung mit der Profilleiste ist. Die genannten Bauteile (Profilleiste und Wasserkastenabdeckung) können also durch Bereitstellung nur eines zusätzlichen Bauteils (Zusatzteil) miteinander lösbar gefügt werden.

Eine weitere bevorzugte Ausführungsform sieht vor, dass eines der Bauteile ein Leuchtengehäuse, eine Tragstruktur oder eine Tragschiene einer Leuchte ist und/oder dass eines der Bauteile eine Leuchtenabdeckung zur lösbaren Verbindung mit dem Leuchtengehäuse, der Tragstruktur oder der Tragschiene ist. Dies ist insbesondere dann vorteilhaft, wenn eines der beiden Bauteile bereits bauseitig (beispielsweise wand- oder deckenseitig) montiert ist und das andere Bauteil dann durch einfaches Aufpressen montiert werden kann, bei Bedarf aber auch wieder abgenommen werden kann.

Bei einer weiteren Ausführungsform ist vorgesehen, dass das Zusatzteil einen ersten elektrischen Kontaktierungsabschnitt aufweist, dass das erste Bauteil oder das zweite Bauteil einen zweiten elektrischen Kontaktierungsabschnitt aufweist, dass der erste Kontaktierungsabschnitt und der zweite Kontaktierungsabschnitt in der offenen Funktionsstellung des Zusatzteils elektrisch getrennt sind und dass der erste Kontaktierungsabschnitt und der zweite Kontaktierungsabschnitt in der geschlossenen Funktionsstellung des Zusatzteils eine elektrische Leitfunktion zwischen dem Zusatzteil und dem ersten Bauteil oder dem zweiten Bauteil bereitstellen. Auf diese Weise kann die mechanische Fügefunktion der Befestigungsanordnung mit einer elektrischen Kontaktfunktion zwischen dem Zusatzteil und dem ersten Bauteil oder zwischen dem Zusatzteil und dem zweiten Bauteil ergänzt werden, ohne dass es hierfür eines zusätzlichen Handhabungsschrittes bedarf.

Der zweite Kontaktierungsabschnitt ist beispielsweise an dem Fügeabschnitt des ersten Bauteils oder in oder an dem Aufnahmeabschnitt des zweiten Bauteils angeordnet und wirkt in der geschlossenen Funktionsstellung des Zusatzteils mit dem ersten Kontaktierungsabschnitt zusammen.

Besonders bevorzugt ist es, wenn das zweite Bauteil oder das erste Bauteil einen dritten Kontaktierungsabschnitt aufweist und wenn der erste Kontaktierungsabschnitt, der zweite Kontaktierungsabschnitt und der dritte Kontaktierungsabschnitt in der geschlossenen Funktionsstellung des Zusatzteils eine elektrische Leitfunktion zwischen dem ersten Bauteil, dem Zusatzteil und dem zweiten Bauteil bereitstellen. Auf diese Weise kann die mechanische Fügefunktion der Befestigungsanordnung mit einer elektrischen Kontaktfunktion zwischen dem ersten Bauteil und dem zweiten Bauteil ergänzt werden (unter elektrischer Zwischenschaltung des Zusatzteils), ohne dass es hierfür eines zusätzlichen Handhabungsschrittes bedarf.

Bevorzugt ist es, wenn ausgehend von der offenen Funktionsstellung des Zusatzteils das erste Bauteil mit dem Fügeabschnitt längs einer Fügerichtung und vorzugweise senkrecht zu noch zueinander beabstandeten Begrenzungsflächen des ersten Bauteils und des zweiten Bauteils in Richtung des Aufnahmeabschnitts des zweiten Bauteils bewegbar ist. Dies ermöglicht eine einfache Montage des ersten und des zweiten Bauteils.

In entsprechender Weise ist es bevorzugt, wenn ausgehend von einem Montagezustand des ersten Bauteils und des zweiten Bauteils, in welchem das mindestens eine Zusatzteil seine geschlossene Funktionsstellung einnimmt, das erste Bauteil durch Beaufschlagung mit einer Demontagekraft, welche zu der Fügerichtung entgegengesetzt orientiert ist, von dem zweiten Bauteil trennbar ist. Dies ermöglicht eine einfache Demontage des ersten und des zweiten Bauteils.

Ferner ist bevorzugt, wenn der Fügeabschnitt des ersten Bauteils von einer Begrenzungsfläche des ersten Bauteils hervorspringt, die dem zweiten Bauteil zugewandt ist. Dies ermöglicht eine von dem Aufbau des ersten Bauteils zumindest weitestgehend unabhängige Ausgestaltung des Fügeabschnitts.

In entsprechender Weise ist es bevorzugt, wenn das zweite Bauteil eine dem ersten Bauteil zugewandte Begrenzungsfläche aufweist, wobei der Aufnahmeabschnitt ausgehend von der Begrenzungsfläche des zweiten Bauteils in Form einer Ausnehmung gebildet ist. Dies ermöglicht eine von dem Aufbau des zweiten Bauteils zumindest weitestgehend unabhängige Ausgestaltung des Aufnahmeabschnitts.

Insbesondere ist es bevorzugt, wenn die vorstehend genannten Begrenzungsflächen des ersten Bauteils und des zweiten Bauteils in einem Montagezustand des ersten Bauteils und des zweiten Bauteils, in welchem das mindestens eine Zusatzteil seine geschlossene Funktionsstellung einnimmt, zueinander parallel sind und/oder aneinander anliegen. Dies ermöglicht die Bereitstellung einer kompakten und stabilen Befestigungsanordnung.

In den Unteransprüchen 35 bis 37 sind besonders bevorzugte Merkmalskombinationen angegeben.

Weitere Merkmale und Vorteile der Erfindung sind Gegenstand der nachfolgenden Beschreibung und der zeichnerischen Darstellung bevorzugter Ausführungsbeispiele.

In der Zeichnung zeigt bzw. zeigen
- Fig. 1: eine erste Ausführungsform einer Befestigungsanordnung, wobei zwei Zusatzteile der Befestigungsanordnung eine offene Funktionsstellung einnehmen;
- Fig. 2: die Befestigungsanordnung gemäß Fig. 1, wobei die Zusatzteile eine instabile Totpunktstellung einnehmen;
- Fig. 3: die Befestigungsanordnung gemäß Fig. 1, wobei die Zusatzteile eine geschlossene Funktionsstellung einnehmen;
- Fig. 4: eine Variante der Befestigungsanordnung gemäß Fig. 1, mit einer zusätzlichen Halteeinrichtung;
- Fig. 5a: eine zweite Ausführungsform einer Befestigungsanordnung, wobei die Zusatzteile der Befestigungsanordnung eine offene Funktionsstellung einnehmen;
- Fig. 5b: die Befestigungsanordnung gemäß Fig. 5a, wobei die Zusatzteile eine geschlossene Funktionsstellung einnehmen;
- Fig. 6: eine Variante der Befestigungsanordnung gemäß Figuren 5a und 5b;
- Fig. 7: eine dritte Ausführungsform einer Befestigungsanordnung, wobei ein Zusatzteil der Befestigungsanordnung eine offene Funktionsstellung einnimmt;
- Fig. 8: die Befestigungsanordnung gemäß Fig. 7, wobei ein Zusatzteil der Befestigungsanordnung eine geschlossene Funktionsstellung einnimmt;
- Fig. 9: eine vierte Ausführungsform einer Befestigungsanordnung, wobei ein Zusatzteil der Befestigungsanordnung eine offene Funktionsstellung einnimmt;
- Fig. 10a bis 10c: eine Ausführungsform einer Befestigungsanordnung in Form eines ersten Beispiels einer Kraftfahrzeugbaugruppe, wobei ein Zusatzteil der Kraftfahrzeugbaugruppe in unterschiedlichen Stellungen dargestellt ist;
- Fig. 11a bis 11c: eine Ausführungsform einer Befestigungsanordnung in Form eines zweiten Beispiels einer Kraftfahrzeugbaugruppe, wobei ein Zusatzteil der Kraftfahrzeugbaugruppe in unterschiedlichen Stellungen dargestellt ist;
- Fig. 12a und 12b: eine Ausführungsform einer Befestigungsanordnung in Form einer Leuchtenbaugruppe;
- Fig. 13a bis 13e: eine Ausführungsform einer Befestigungsanordnung, die ein Konstruktionsprofil umfasst;
- Fig. 14a und 14b: eine Ausführungsform einer Befestigungsanordnung, die elektrische Kontaktierungsabschnitte umfasst; und
- Fig. 15a und 15b: eine weitere Ausführungsform einer Befestigungsanordnung, die elektrische Kontaktierungsabschnitte umfasst.

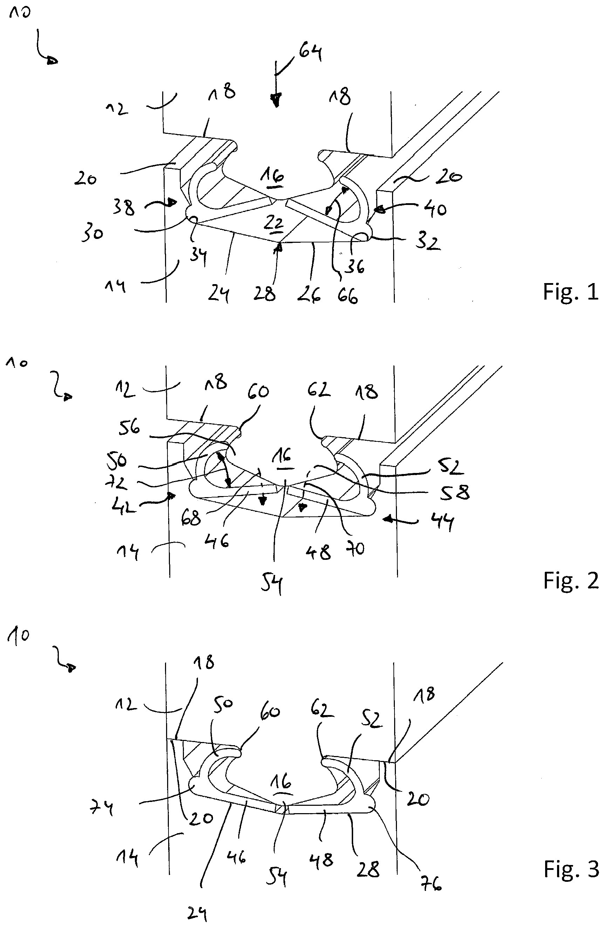

Die Fig. 1 bis 4 zeigen eine erste Ausführungsform einer Befestigungsanordnung 10, wobei ein erstes Bauteil 12 vorgesehen ist, das wiederholbar lösbar an einem zweiten Bauteil 14 befestigbar ist. Die Bauteile 12, 14 sind insbesondere prismenförmig.

Das erste Bauteil 12 weist einen Fügeabschnitt 16 auf. Der Fügeabschnitt 16 springt von einer Begrenzungsfläche 18 des ersten Bauteils 12 hervor, die dem zweiten Bauteil 14 zugewandt ist.

Das zweite Bauteil 14 weist eine dem ersten Bauteil 12 zugewandte Begrenzungsfläche 20 auf. Die Begrenzungsflächen 18 und 20 sind vorzugsweise zueinander parallel, zumindest in einem Montagezustand der Bauteile 12 und 14 (vgl. Fig. 3). Ferner weist das zweite Bauteil 14 einen Aufnahmeabschnitt 22 auf, der ausgehend von der Begrenzungsfläche 20 in Form einer Ausnehmung gebildet ist.

Der Aufnahmeabschnitt 22 weist zueinander winklig angeordnete Begrenzungsflächen 24 und 26 auf, welche bezogen auf die Begrenzungsfläche 20 nach innen versetzt sind. Die Begrenzungsflächen 24 und 26 grenzen vorzugsweise in einem Bereich 28 aneinander an.

An ihren voneinander abgewandten seitlichen Enden grenzen die Begrenzungsflächen 24 und 26 an konkave Gelenkabschnitte 30, 32 an. Diese Gelenkabschnitte wirken mit konvexen Gelenkabschnitten 34, 36 jeweils eines Zusatzteils 38, 40 zusammen. Jeweils zwei Gelenkflächen 30 und 34 bzw. 32 und 36 bilden gemeinsam ein Schwenkgelenk 42 bzw. 44 in Form eines Reibungsgelenks, vergleiche Fig. 2.

Die Zusatzteile 38 und 40 weisen jeweils zwei zueinander winklig angeordnete Schenkel auf, nämlich erste Schenkel 46 bzw. 48, welche den Begrenzungsfläche 24 bzw. 26 des Aufnahmeabschnitts 22 zugewandt sind, und zweite Schenkel 50 bzw. 52.

Die ersten Schenkel 46, 48 erstrecken sich im Querschnitt gesehen vorzugsweise in einer im Wesentlichen geraden Ebene. Die zweiten Schenkel 50, 52 weisen im Querschnitt gesehen vorzugsweise einen gekrümmten Verlauf auf.

Der Fügeabschnitt 16 weist einen Andrückabschnitt 54 auf, der mit den freien Enden der ersten Schenkel 46, 48 der Zusatzteile 38, 40 zusammenwirkt. Der Fügeabschnitt 16 weist ferner Aufweitungsabschnitte 56, 58 auf, welche mit den freien Enden der zweiten Schenkel 50, 52 zusammenwirken.

Das erste Bauteil 12 weist zwei Hinterschnittbereiche 60, 62 auf, die jeweils zwischen Teilabschnitten der Begrenzungsfläche 18 und den Aufweitungsabschnitten 56, 58 des Fügeabschnitts 16 angeordnet sind.

In Fig. 1 ist eine offene Funktionsstellung der Zusatzteile 38, 40 dargestellt. In dieser offenen Funktionsstellung sind die ersten Schenkel 46, 48 zu den jeweiligen Begrenzungsflächen 24, 26 des Aufnahmeabschnitts 22 beabstandet. Ferner sind die freien Enden der zweiten Schenkel 50, 52 soweit zueinander beabstandet, dass der Fügeabschnitt 16 mit seinen Aufweitungsabschnitten 56, 58 in einen zwischen den freien Enden der zweiten Schenkel 50, 52 begrenzten Montageraum eintauchen kann, entlang einer Fügerichtung 64, welche senkrecht zu den Begrenzungsflächen 18 und 20 der Bauteile 12 und 14 verläuft.

In der offenen Funktionsstellung der Zusatzteile 38, 40 begrenzen die jeweiligen Schenkel 46 und 50 bzw. 48 und 52 der Zusatzteile 38 bzw. 40 einen ersten Spreizwinkel 66, vergleiche Fig. 1. Diesen Spreizwinkel 66 begrenzen die genannten Schenkel der Zusatzteile 38, 40 in einem unverformten Ruhezustand der Zusatzteile 38, 40.

Durch Kontakt des Andrückabschnitts 54 des Fügeabschnitts 16 mit den freien Enden der ersten Schenkel 46, 48, vergleiche Fig. 2, werden die Zusatzteile 38, 40 bezogen auf die Schwenkgelenke 42, 44 in zueinander gegengesetzten Schwenkrichtungen 68, 70 verschwenkt. In einer von der offenen Funktionsstellung abweichenden Totpunktstellung liegt der Andrückabschnitt 54 an den Enden der ersten Schenkel 46, 48 an, während gleichzeitig die Aufweitungsabschnitte 56, 58 an den freien Enden der zweiten Schenkel 50, 52 anliegen und den Spreizwinkel zwischen dem ersten Schenkel 46 und dem zweiten Schenkel 50 bzw. dem ersten Schenkel 48 und dem zweiten Schenkel 52 zu einem zweiten Spreizwinkel 72 vergrößern. Die Vergrößerung von dem ersten Spreizwinkel 66 auf den zweiten Spreizwinkel 72 geht mit einer federelastischen Verformung der Zusatzteile 38 und 40 einher, genauer gesagt mit einer Verbiegung der Schenkel 46 und/oder 50 bzw. 48 und/oder 52.

Das erste Bauteil 12 kann - ausgehend von dem Zustand, in welchem der maximale Spreizwinkel 72 erreicht ist - längs der Fügerichtung 64 weiter in Richtung auf das zweite Bauteil 14 bewegt werden, sodass die Zusatzteile 38 und 40 ihre Totpunktstellung überwinden und weiter in Richtung ihrer Schwenkrichtung 68, 70 verschwenkt werden, bis eine geschlossene Funktionsstellung der Zusatzteile 38, 40 erreicht ist, vergleiche Fig. 3. In der geschlossenen Funktionsstellung der Zusatzteile 38, 40 liegen die ersten Schenkel 46, 48 jeweils an den Begrenzungsflächen 24, 26 des Aufnahmeabschnitts 22 an.

In der geschlossenen Funktionsstellung der Zusatzteile 38, 40 sind die freien Enden der Schenkel 50, 52 formschlüssig in den Hinterschnittbereichen 60, 62 des ersten Bauteils 12 aufgenommen. Ein Spreizwinkel zwischen dem ersten Schenkel 46 und dem zweiten Schenkel 50 bzw. dem ersten Schenkel 48 und dem zweiten Schenkel 52 der Zusatzteile 38 bzw. 40 (in Fig. 3 nicht eingezeichnet) ist dann kleiner als der zweite Spreizwinkel 72 und entspricht vorzugsweise wieder dem ersten Spreizwinkel 66 des unverformten Ruhezustands der Zusatzteile 38, 40. Die einander zugewandten Begrenzungsflächen 18, 20 des ersten Bauteils 12 und des zweiten Bauteils 14 liegen aneinander an. Der Andrückabschnitt 54 des Fügeabschnitts 16 verbleibt in der geschlossenen Funktionsstellung der Zusatzteile 38, 40 in Anlage mit den freien Enden der ersten Schenkel 46, 48, sodass eine insgesamt spielfreie Anordnung geschaffen wird.

Der jeweilige Gelenkabschnitt 34, 36 eines Zusatzteils 38, 40 ist durch einen im Querschnitt teilkreisförmigen Vorsprung 74, 76 gebildet, vergleiche Fig. 3. Es ist möglich, dass sich dieser teilkreisförmige Vorsprung in Schwenkrichtung 68, 70 des Zusatzteils 38, 40 gesehen über einen Winkel erstreckt, welcher kleiner als 180° Grad ist.

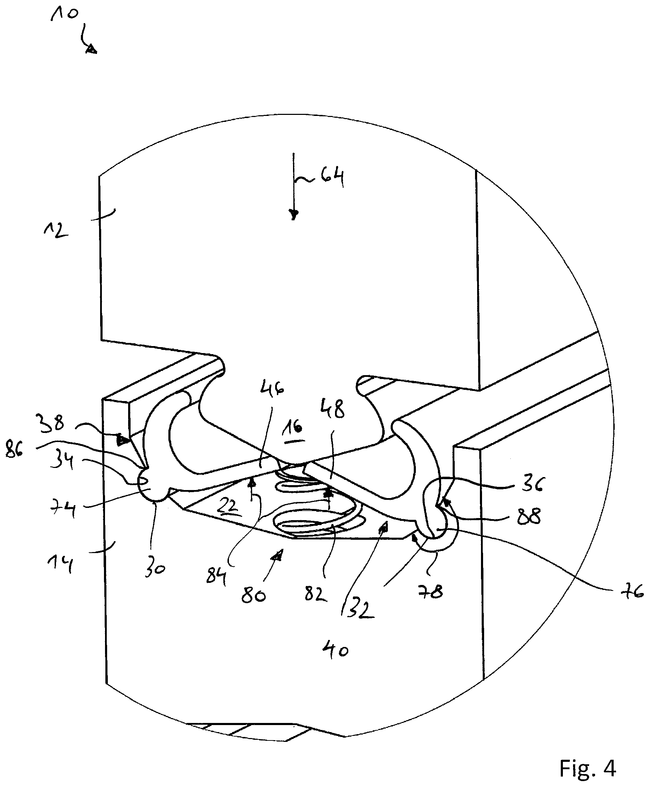

Gemäß einer Variante der Befestigungsanordnung 10, vergleiche Fig. 4, ist es aber auch möglich, dass sich der teilkreisförmige Vorsprung 74, 76 über einen Winkel 78 erstreckt, der größer als 180° Grad ist. Dies ermöglicht eine formschlüssige Aufnahme des konvexen Gelenkabschnitts 34, 36 des Zusatzteils 38, 40 in einem jeweiligen konkaven Gelenkabschnitt 30, 32 des zweiten Bauteils 14.

Über die mit Bezug auf die Fig. 1 bis 3 beschriebene Anordnung hinausgehend ist bei der Variante der Befestigungsanordnung 10 gemäß Fig. 4 ferner eine Haltevorrichtung 80 vorgesehen. Die Haltevorrichtung 80 ist beispielsweise eine Druckfeder 82, die sich einenends an dem zweiten Bauteil 14 abstützt und anderenends mit den ersten Schenkeln 46 bzw. 48 der Zusatzteile 38 bzw. 40 zusammenwirkt und auf diese Weise eine Haltekraft 84 auf jeweils ein Zusatzteil 38, 40 ausübt, welche die Zusatzteile 38, 40 in Richtung ihrer offenen Funktionsstellung drängt. Dabei ist die offene Funktionsstellung der Zusatzteile 38, 40 vorzugsweise durch Anschläge 86, 88 begrenzt, welche durch umfangseitige Begrenzungen der Gelenkabschnitte 30, 32 des zweiten Bauteils 14 gebildet sein können.

Um die Befestigungsanordnung 10 ausgehend aus der offenen Funktionsstellung der Zusatzteile 38, 40 in die geschlossene Funktionsstellung zu überführen, muss entlang der Fügerichtung 64 eine Fügekraft aufgebracht werden, welche größer ist als eine Gesamtkraft aus einer ersten Kraft und einer zweiten Kraft, wobei die erste Kraft für eine maximale Aufspreizung der Schenkel der Zusatzteile 38 und 40 erforderlich ist (vergleiche vorstehende Beschreibung zu den Fig. 1 bis 3) und wobei die zweite Kraft erforderlich ist, um die Feder 82 ausgehend aus der offenen Funktionsstellung der Zusatzteile 38, 40 soweit zu komprimieren, dass die Zusatzteile 38, 40 ihre geschlossene Funktionsstellung einnehmen.

Für die nachfolgende Beschreibung weiterer Ausführungsbeispiele gilt, dass funktionsidentische oder funktionsäquivalente Bauteile mit zu den Ausführungsformen gemäß Fig. 1 bis 4 jeweils identischen Bezugszeichen bezeichnet sind. Insoweit als auf Besonderheiten weiterer Ausführungsbeispiele nicht eingegangen wird, wird auf die vorstehende Beschreibung zu den Fig. 1 bis 4 Bezug genommen.

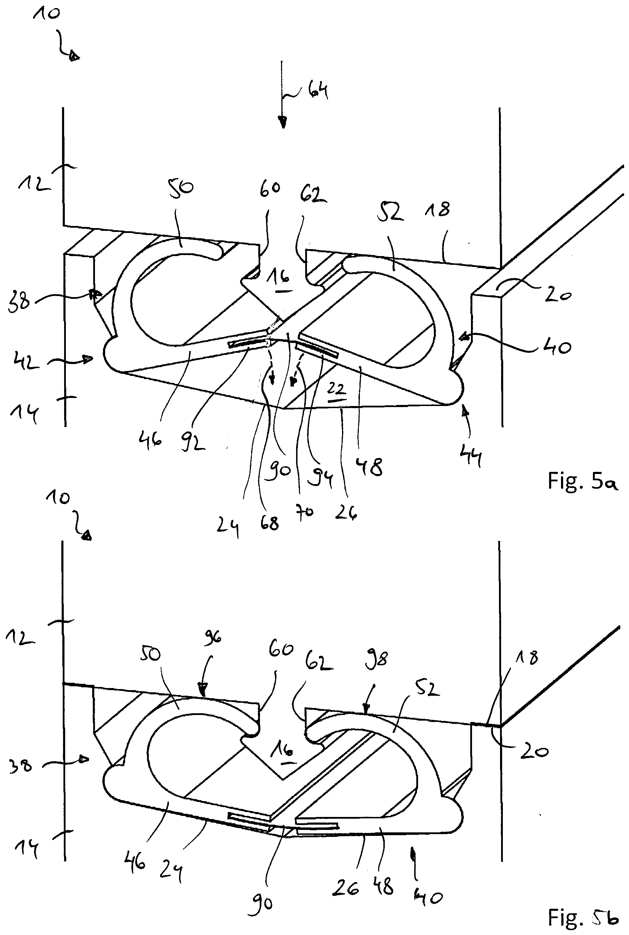

Bei der Ausführungsform gemäß Fig. 5a und 5b sind ebenfalls zwei Zusatzteile 38 und 40 vorgesehen, welche jedoch über einen Verbindungsabschnitt 90 miteinander verbunden sind. Der Verbindungsabschnitt 90 ist beispielsweise in Form einer Blattfeder ausgebildet, welche in Blattfederaufnahmen 92 und 94 in den freien Enden der ersten Schenkel 46 und 48 der Zusatzteile 38 und 40 aufgenommen ist.

Der Verbindungsabschnitt 90 kann aus einem Metall bestehen. Er kann alternativ auch aus einem Kunststoff, einem Elastomer oder einem Faserkunststoffverbundmaterial bestehen. Wenn zugleich auch die Zusatzteile 38, 40 aus einem Kunststoff bestehen, kann der Verbindungsabschnitt 90 auch einstückig mit einem Zusatzteil 38 oder 40, insbesondere einstückig mit beiden Zusatzteilen 38 und 40 hergestellt werden, beispielsweise indem die Zusatzteile 38 und/oder 40 zusammen mit dem Verbindungsabschnitt 90 extrudiert oder koextrudiert werden.

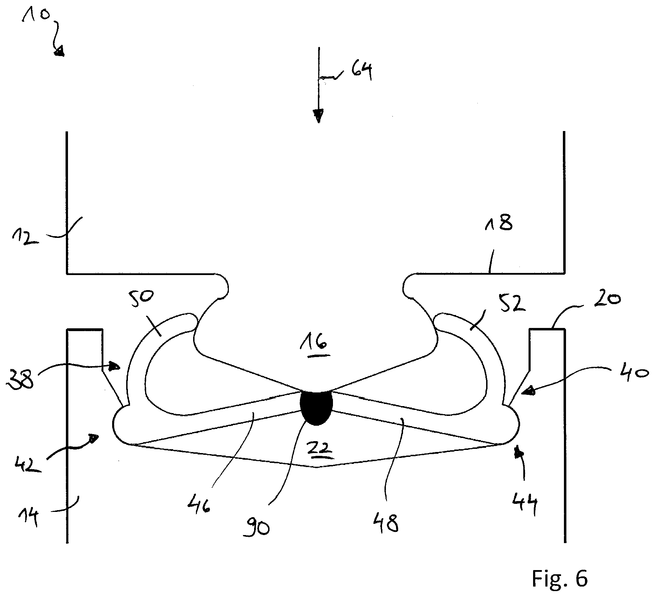

Anstelle des in den Figuren 5a und 5b dargestellten Verbindungsabschnitts 90 in Form einer Blattfeder kann auch ein vorzugsweise aus Kunststoff oder einem Elastomer hergestellter Verbindungsabschnitts 90 verwendet werden. Dies ist beispielhaft in Fig. 6 dargestellt. Der Verbindungsabschnitt 90 kann beispielsweise im Querschnitt kreisförmig oder elliptisch ausgebildet sein oder teilkreisförmige oder teilelliptische Querschnittsbereiche aufweisen. Abweichend von der zeichnerischen Darstellung ist auch die Verwendung eines im Querschnitt flachen und insbesondere dünnen Verbindungsabschnitts 90 in Form eines Filmscharniers möglich.

Unter weiterem Bezug auf das in Fig. 5a und 5b dargestellte Ausführungsbeispiel weist der Fügeabschnitt 16 des ersten Bauteils 12 keine Aufweitungsabschnitte 56, 58 und auch keinen Andrückabschnitt 54 auf. Der Fügeabschnitt 16 bildet Hinterschnittbereiche 60 und 62 aus, welche an die Begrenzungsfläche 18 des ersten Bauteils 12 angrenzen.

In der offenen Funktionsstellung der Zusatzteile 38, 40 liegt die Begrenzungsfläche 18 des ersten Bauteils 12 an Anlageabschnitten der zweiten Schenkel 50, 52 der Zusatzteile 38, 40 an. Der Fügeabschnitt 16 ist zu dem Verbindungsabschnitt 90 beabstandet. Wird das erste Bauteil 12 entlang der Fügerichtung 64 auf das zweite Bauteil 14 zubewegt, sodass sich der Abstand zwischen den zueinander parallelen Begrenzungsflächen 18 und 20 des ersten Bauteils 12 und des zweiten Bauteils 14 verkleinert, gleiten die Anlageabschnitte der zweiten Schenkel 50, 52 der Zusatzteile 38, 40 in Kontaktbereichen 96, 98 an der ersten Begrenzungsfläche 18 entlang, wobei gleichzeitig die Zusatzteile 38 und 40 in Schwenkrichtungen 68, 70 um die Schwenkgelenke 42, 44 verschwenken. Hierdurch wird der Verbindungsabschnitt 90 gestaucht, bis er in einer (nicht dargestellten) Totpunktstellung der Zusatzteile 38, 40 maximal gestaucht ist. In diesem Zustand sind die freien Enden der ersten Schenkel 46 und 48 minimal zueinander beabstandet, wobei die ersten Schenkel zueinander im Wesentlichen parallel ausgerichtet sind. Ausgehend von diesem Zustand führt eine weitere Verlagerung des Bauteils 12 längs der Fügerichtung 64 dazu, dass die Zusatzteile 38, 40 weiter in Richtung der geschlossenen Funktionsstellung (vergleiche Fig. 5b) verschwenkt werden, sodass zumindest ein Teil der in dem Verbindungsabschnitt 90 gespeicherten Verformungsenergie frei wird, um die Zusatzteile 38, 40 aus der instabilen Totpunktstellung in die geschlossene Funktionsstellung zu überführen. In der geschlossenen Funktionsstellung sind die freien Enden der zweiten Schenkel 50, 52 in den Hinterschnittbereichen 60 und 62 des Fügeabschnitts 16 aufgenommen. Die ersten Schenkel 46 und 48 liegen an den Begrenzungsflächen 24, 26 des Aufnahmeabschnitts 22 des zweiten Bauteils 14 an.

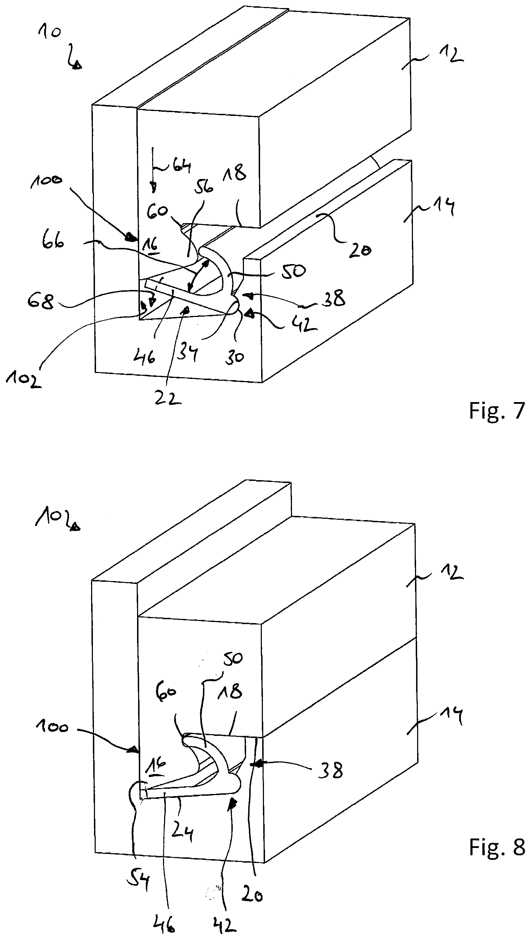

Abweichend von den vorstehend beschriebenen Ausführungsformen ist es auch möglich, dass in einem Verbindungsbereich einer Befestigungsanordnung lediglich ein Zusatzteil 38 angeordnet ist, vergleiche Fig. 7 bis 12b.

Bei Verwendung nur eines Zusatzteils 38 weist der Fügeabschnitt 16 des ersten Bauteils zusätzlich zu einem Aufweitungsabschnitt 56 auf seiner dem Aufweitungsabschnitt 56 abgewandten Seite eine Abstützfläche 100 auf, welche vorzugsweise in einer geraden Ebene verläuft und welche mit einer Gegenfläche 102 des zweiten Bauteils 14 zusammenwirkt, vgl. Fig. 7, 8 und 10a bis 12b.

In der offenen Funktionsstellung des entspannten Zusatzteils 38 begrenzen die Schenkel 46, 50 des Zusatzteils 38 einen ersten Spreizwinkel 66 (vgl. Fig. 7, 10a, 11a, 12a). Ausgehend von der offenen Funktionsstellung wird das Zusatzteil 38 mit dem Fügeabschnitt 16 längs der Fügerichtung 64 und senkrecht zu den noch zueinander beabstandeten Begrenzungsflächen 18 und 20 der Bauteile 12 und 14 in Richtung des Aufnahmeabschnitts 22 des zweiten Bauteils 14 bewegt. Hierbei gleitet die Abstützfläche 100 des Fügeabschnitts 16 des ersten Bauteils 12 an der Gegenfläche 102 des zweiten Bauteils 14 ab. Die Fügerichtung 64 ist vorzugsweise parallel zu der Abstützfläche 100 und zu der Gegenfläche 102. Gleichzeitig überführt der Andrückabschnitt 54 des Fügeabschnitts 16 den ersten Schenkel 46 ausgehend von der offenen Funktionsstellung des Zusatzteils 38 (vergleiche bspw. Fig. 7) der Schwenkrichtung 68 um das Schwenkgelenk 42 folgend in Richtung auf die Begrenzungsfläche 24 des Aufnahmeabschnitts 22.

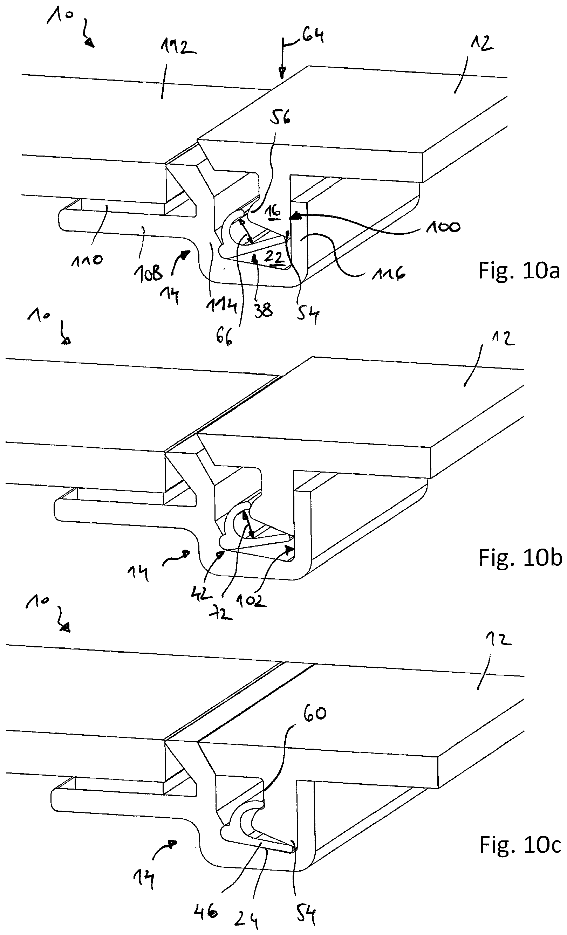

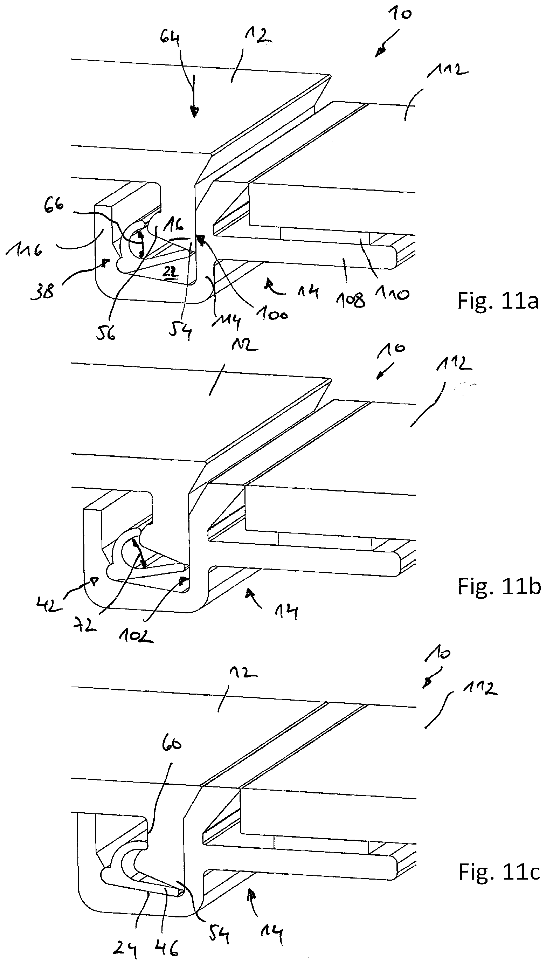

In einer Zwischenlage des Zusatzteils 38 (vgl. bspw. Fig. 10b, 11b) ist der Spreizwinkel zwischen den Schenkeln 46 und 50 in einer der Fig. 2 entsprechenden Totpunktstellung des Zusatzteils 38 zu einem zweiten Spreizwinkel 72 aufgespreizt, der größer ist als der erste Spreizwinkel 66. Die Aufspreizung erfolgt in vorstehend beschriebener Art und Weise durch gleichzeitigen Kontakt des Andrückabschnitts 54 des Fügeabschnitts 16 an dem freien Ende des Schenkels 46 und des Aufweitungsabschnitts 56 an dem freien Ende des zweiten Schenkels 50. Bei einer Überführung aus der Totpunktstellung in die geschlossene Funktionsstellung des Zusatzteils 38 (vergleiche Fig. 8, 10c, 11c, 12b) verkleinert sich der Spreizwinkel zwischen den Schenkeln 46 und 50 wieder, sodass die zuvor durch die Aufspreizung der Schenkel 46, 50 des Zusatzteils 38 gespeicherte Energie zumindest teilweise wieder frei wird.

In der geschlossenen Funktionsstellung (vergleiche Fig. 8, 10c, 11c, 12b) des Zusatzteils 38 liegt der erste Schenkel 46 an der Begrenzungsfläche 24 des Aufnahmeabschnitts 22 des zweiten Bauteils 14 an. Das freie Ende des zweiten Schenkels 50 des Zusatzteils 38 ist in dem Hinterschnittbereich 60 aufgenommen. Die einander zugewandten Begrenzungsflächen 18 und 20 des ersten Bauteils 12 und des zweiten Bauteils 14 liegen aneinander an. Ferner liegt die Abstützfläche 100 des Fügeabschnitts 16 an der Gegenfläche 102 des zweiten Bauteils 14 an. Der Andrückabschnitt 54 des Fügeabschnitts 16 liegt an dem freien Ende des ersten Schenkels 46 an.

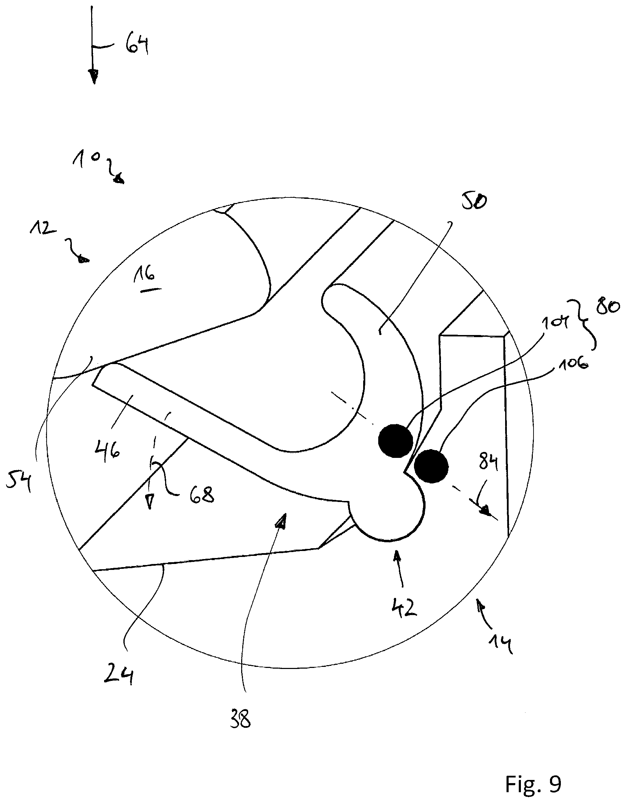

Unabhängig von der Verwendung eines Zusatzteils 38 oder mehrerer Zusatzteile 38, 40 ist es anstelle einer Verwendung einer Halteeinrichtung 80 in Form einer Feder 82 (vergleiche Fig. 4) auch möglich, eine Halteeinrichtung 80 mit Magnetelementen 104, 106 zu verwenden (vergleiche Fig. 9). Mindestens eines der Magnetelemente 104, 106 ist an dem Zusatzteil 38 angeordnet. Das andere der Magnetelemente 104, 106 ist an dem zweiten Bauteil 14 angeordnet. Eine Anordnung der Halteeinrichtung 80 unmittelbar benachbart zu dem Schwenkgelenk 42 ermöglicht ein besonders einfaches Halten des Zusatzteils 38 in dessen offener Funktionsstellung. Die zwischen den Magnetelementen 104, 106 wirkende Haltekraft 84 erzeugt ein Haltemoment, das um die Schwenkachse des Schwenkgelenks 42 wirksam ist. Dieses Haltemoment wirkt entgegengesetzt zu einem Betätigungsmoment zum Verschwenken des Zusatzteils 38 in Schwenkrichtung 68 mittels einer Fügekraft, welche entlang der Fügerichtung 64 aufgebracht wird.

Die in den Fig. 10a bis 11c dargestellten Befestigungsanordnungen 10 sind Kraftfahrzeugbaugruppen mit einem ersten Bauteil 12 in Form einer Wasserkastenabdeckung und mit einem zweiten Bauteil 14 in Form einer Profilleiste. Die Profilleiste ist über einen Verbindungsabschnitt 108 und einen Verklebungsabschnitt 110 dauerhaft mit einer in Einbaulage an einem Kraftfahrzeug unteren Berandung einer Windschutzscheibe 112 verbunden.

Das zweite Bauteil 14 in Form einer Profilleiste weist einen U-förmigen Aufnahmeabschnitt 22 auf, der in Richtung des Verbindungsabschnitts 108 durch einen Abschnitt 114 und anderenends durch einen freien Abschnitt 116 begrenzt ist. Die Anordnung umfasst ein zu der Profilleiste separat bereitgestelltes Zusatzteil 38, das um ein Schwenkgelenk 42 verschwenkbar ist, wobei das Schwenkgelenk 42 an den Abschnitt 114 angrenzend angeordnet ist. Die Gegenfläche 102, welche mit der Abstützfläche 100 des Fügeabschnitts 16 zusammenwirkt, ist an dem freien Abschnitt 116 angeordnet.

Durch Aufdrücken des ersten Bauteils 12 in Form der Wasserkastenabdeckung in einer Fügerichtung 64, welche senkrecht zu der Erstreckung der Windschutzscheibe verläuft, kann die Wasserkastenabdeckung in vorstehend beschriebener Art und Weise mit dem zweiten Bauteil 14 in Form der Profilleiste gefügt werden. Hierbei wird das Zusatzteil 38 ausgehend von einer offenen Funktionsstellung (vergleiche Fig. 10a, 11a) über eine instabile Totpunktstellung (vergleiche Fig. 10b, 11b) in eine geschlossene Funktionsstellung überführt (vergleiche Fig. 10c, 11c).

Es ist abweichend von der Ausführungsform gemäß Fig. 10a bis 10c möglich, dass das Schwenkgelenk 42 des Zusatzteils 38 an den freien Abschnitt 116 angrenzend angeordnet ist und dass die Gegenfläche 102, welche mit der Abstützfläche 100 des Fügeabschnitts 16 zusammenwirkt, an dem Abschnitt 114 angeordnet ist, vergleiche Fig. 11a bis 11c.

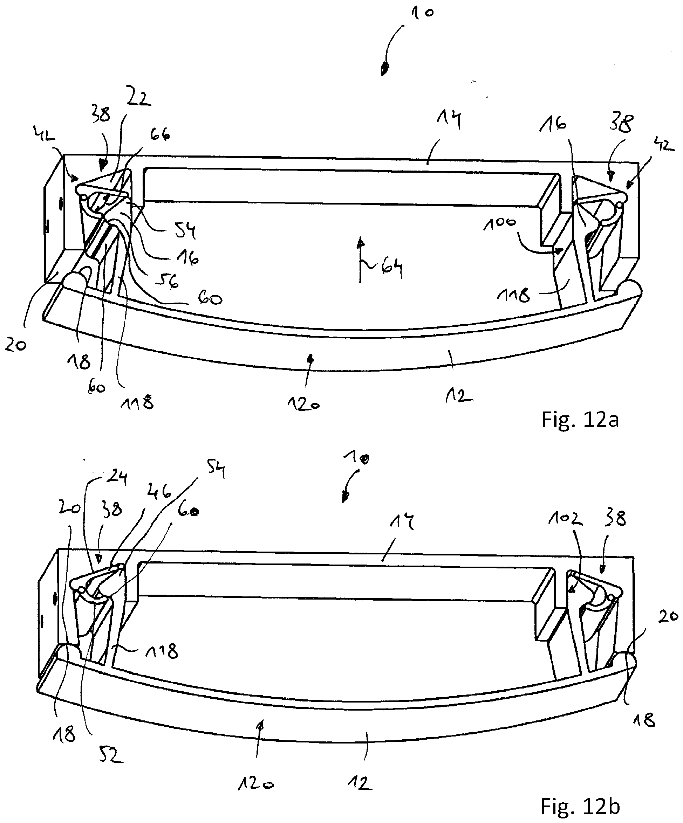

Das vorstehend beschriebene Befestigungsprinzip ist auch für Bauteilgruppen in Form einer Leuchtenbaugruppe vorteilhaft. Beispielsweise ist ein zweites Bauteil 14 in Form eines Leuchtengehäuses vorgesehen, das gebäudeseitig beispielsweise an einer Decke befestigbar oder befestigt ist (vergleiche Fig. 12a). Zum Fügen eines ersten Bauteils 12 in Form einer Leuchtenabdeckung an dem zweiten Bauteil 14 sind zwei voneinander räumlich getrennte Verbindungsbereiche mit jeweils einem Zusatzteil 38 vorgesehen. Die Zusatzteile 38 sind jeweils um Schwenkgelenke 42 verschwenkbar, um aus einer offenen Funktionsstellung (vergleiche Fig. 12a) in eine geschlossene Funktionsstellung (vergleiche Fig. 12b) überführt zu werden.

Für eine möglichst unauffällige Integration der Verbindungsbereiche ist es bevorzugt, wenn der Fügeabschnitt 16 des ersten Bauteils 12 über einen Steg 118 von einer Blende 120 des ersten Bauteils 12 beabstandet angeordnet ist. Die Blende 120 weist Begrenzungsflächen 18 auf, die mit Begrenzungsflächen 20 des zweiten Bauteils zusammenwirken.

Ein Hinterschnittbereich 60, in welchem ein freies Ende eines zweiten Schenkels 52 des Zusatzteils 38 in dessen geschlossener Funktionsstellung aufgenommen ist, ist (der Länge des Stegs 118 entsprechend) zu der Blende 120 beabstandet. Auf diese Weise ist eine relativ "deckennahe" Befestigung der Blende 120 an dem zweiten Bauteil 14 möglich.

Abweichend von der unter Bezug auf die Figuren 12a und 12b beschriebenen Ausführungsform ist es umgekehrt auch möglich, dass ein erstes Bauteil 12 in Form eines Leuchtengehäuses vorgesehen ist und ein zweites Bauteil 14 in Form einer Leuchtenabdeckung ausgeführt ist.

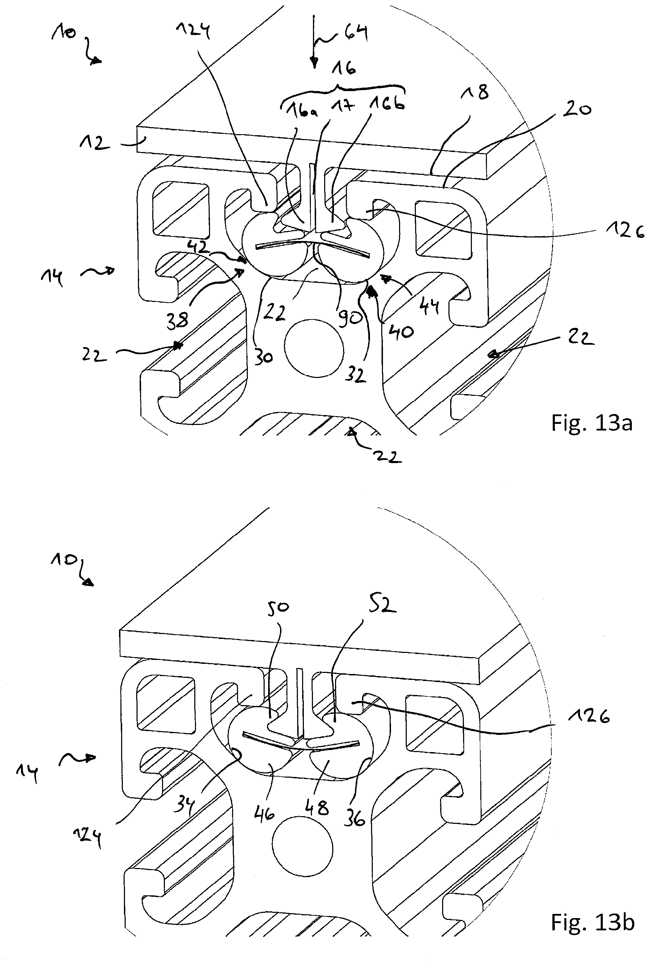

Die in den Fig. 13a bis 13e dargestellte Ausführungsform weist einen mit dem Aufbau der Ausführungsform gemäß Fig. 5a und 5b vergleichbaren Aufbau auf, wobei das zweite Bauteil 14 durch ein Konstruktionsprofil gebildet ist, das entlang seines Umfangs gesehen vorzugsweise mehrere Aufnahmeabschnitte 22 aufweist. Die Zusatzteile 38 und 40 sind über einen Verbindungsabschnitt 90 miteinander verbunden und haben einen im Wesentlichen kreisförmigen Querschnitt, wobei ein Teilumfang des Querschnitts jeweils einen konvexen Gelenkabschnitt 34 bzw. 36 (vgl. Fig. 13b) eines Schwenkgelenks 42 bzw. 44 (vgl. Fig. 13a) bildet. Konkave Gelenkabschnitte 30, 32 des zweiten Bauteils 14 weisen im Vergleich zu den konvexen Gelenkabschnitten 34, 36 größere Krümmungsradien auf.

Der Fügeabschnitt 16 kann - dem Ausführungsbeispiel gemäß Fig. 5a und 5b entsprechend - im Querschnitt massiv ausgebildet sein oder - wie in Fig. 13a und 13b dargestellt - zwei zueinander benachbarte Fügeabschnittsbereiche 16a und 16b aufweisen, welche jeweils mit einem der Schenkel 50 bzw. 52 der Zusatzteile zusammenwirken und mit einander zugewandten Seiten einen Schlitz 17 des Fügeabschnitts 16 begrenzen.

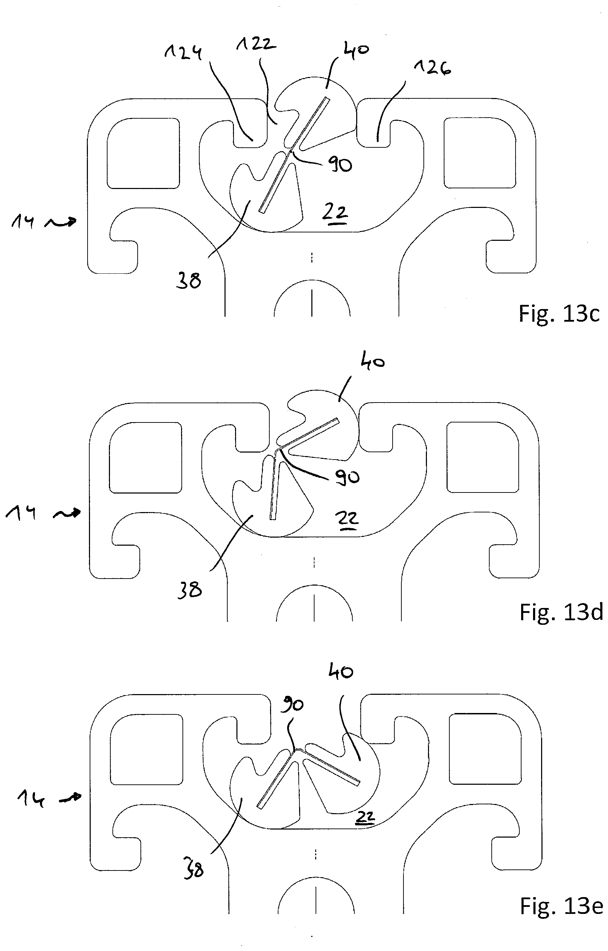

Die Aufnahmeabschnitte 22 des zweiten Bauteils 14 weisen eine Eingriffsöffnung 122 auf (vgl. Fig. 13c), die von Niederhaltern 124 und 126 begrenzt ist, welche sowohl in der offenen Funktionsstellung (vgl. Fig. 13a) als auch in der geschlossenen Funktionsstellung (vgl. Fig. 13b) der Zusatzteile 38, 40 an einem Teilumfang der Zusatzteile 38, 40 anliegen.

Zur Montage der Zusatzteile 38 und 40 ist der Verbindungsabschnitt 90 blattförmig und reversibel biegbar oder knickfähig ausgebildet. Ausgehend von einem zumindest weitestgehend unverformten Zustand (vgl. Fig. 13c), in welchem eines der Zusatzteile 38, 40 durch die Eingriffsöffnung 122 in den Aufnahmeabschnitt 22 eingeführt wird, kann der Verbindungsabschnitt 90 geknickt werden (vgl. Fig. 13d), sodass in einer kompakten Einführkonfiguration des Verbundes aus den Zusatzteilen 38, 40 und dem (dann stark geknickten) Verbindungsabschnitt 90 auch das andere der Zusatzteile 38, 40 in den Aufnahmeabschnitt 22 eingeführt werden kann (vgl. Fig. 13e). Die in den Figuren 13c bis 13e gezeigten Zusatzteile 38,40 haben dazu einen gegenüber der in den Figuren 13a und 13b dargestellten Variante abgeänderten (immer noch im Wesentlichen kreisförmigen) Querschnitt, der es dem Verbund gestattet, vorübergehend die zum Einführen in den Aufnahmeabschnitt erforderliche kompakte Einführkonfiguration einzunehmen.

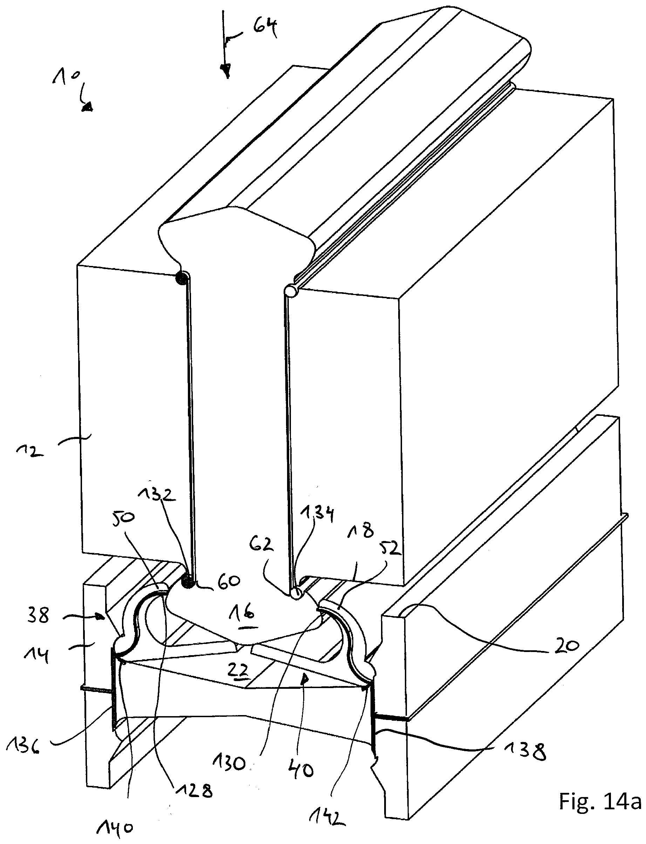

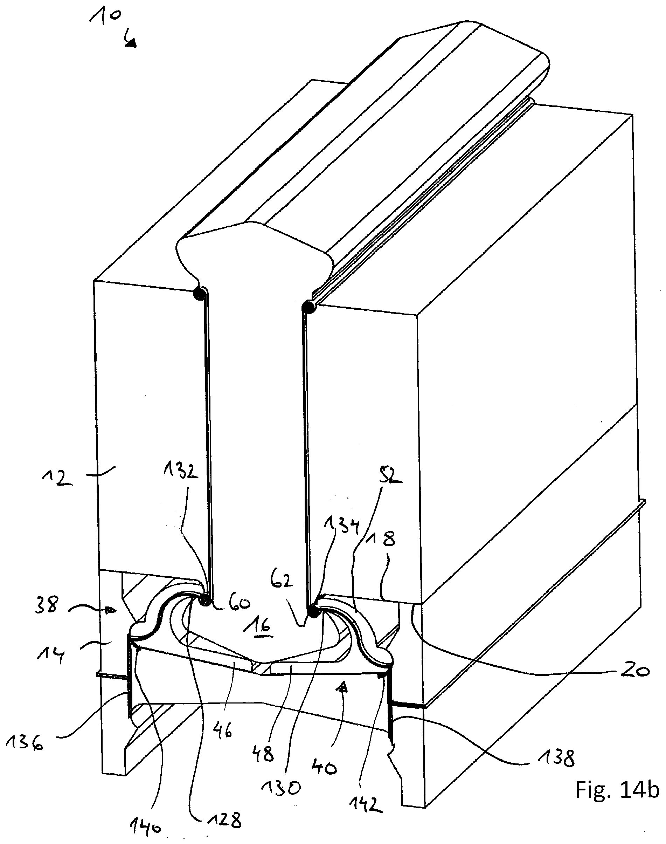

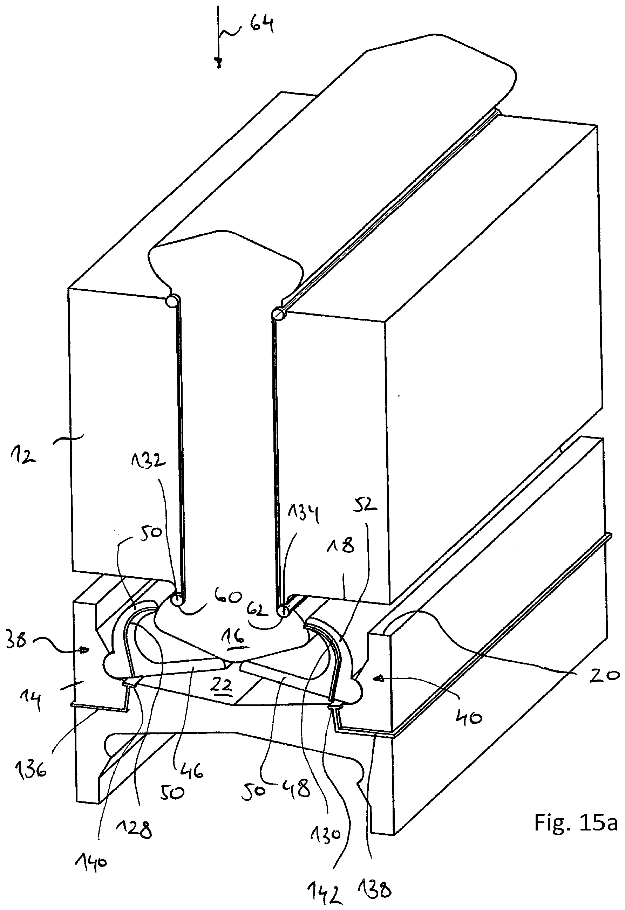

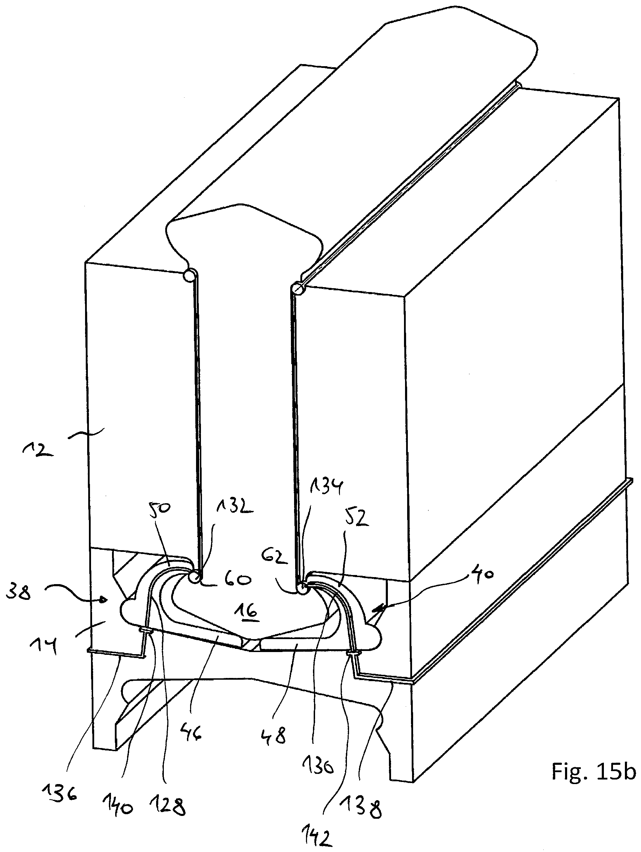

Die in den Fig. 14a und 14b sowie 15a und 15b dargestellten Ausführungsformen weisen einen mit dem Aufbau der Ausführungsform gemäß Fig. 1 bis 3 vergleichbaren Aufbau auf, wobei zusätzlich elektrische Kontaktierungsabschnitte vorgesehen sind.

Das Zusatzteil 38, 40 weist erste Kontaktierungsabschnitte 128, 130 auf, die sich beispielsweise jeweils entlang eines Schenkels 50, 52 eines Zusatzteils 38, 40 erstrecken (vgl. Fig. 14a und 14b) oder sich zwischen beiden Schenkeln 50 und 46 eines Zusatzteils 38 und/oder zwischen beiden Schenkeln 52 und 48 eines Zusatzteils 40 erstrecken (vgl. Fig. 15a und 15b) .

An dem ersten Bauteil 12 sind zweite Kontaktierungsabschnitte 132, 134 vorgesehen. An dem zweiten Bauteil 14 sind dritte Kontaktierungsabschnitte 136, 138 vorgesehen.

Die dritten Kontaktierungsabschnitte 136, 138 weisen jeweils einem ersten Kontaktierungsabschnitt 128, 130 zugewandte Kontaktflächen 140, 142 auf, die mit freien Enden der ersten Kontaktierungsabschnitte 128, 130 in Kontakt stehen, und zwar - bezogen auf das Ausführungsbeispiel gemäß Fig. 14a und 14b - dauerhaft und unabhängig von der Stellung des Zusatzteils 38, 40 bzw. - bezogen auf das Ausführungsbeispiel gemäß Fig. 15a und 15b - nur in einer der beiden Stellungen des Zusatzteils 38, 40, beispielsweise in der geschlossenen Funktionsstellung.

In der offenen Funktionsstellung der Zusatzteile 38, 40 (vgl. Fig. 14a und 15a) sind die elektrischen Kontaktierungsabschnitte 128 und 132 sowie die elektrischen Kontaktierungsabschnitte 130 und 134 voneinander beabstandet, sodass kein elektrischer Kontaktschluss besteht.

In der geschlossenen Funktionsstellung der Zusatzteile 38, 40 (vgl. Fig. 14b und 15b) liegen die elektrischen Kontaktierungsabschnitte 128 und 132 sowie die elektrischen Kontaktierungsabschnitte 130 und 134 aneinander an, sodass ein elektrischer Kontaktschluss hergestellt ist, der zwischen den Zusatzteilen 38, 40 und dem ersten Bauteil 12 wirksam ist. Dieser Kontaktschluss wird im Zuge der Montage des ersten Bauteils 12 an dem zweiten Bauteil 14 hergestellt, wobei sich die Zusatzteile 38 und 40 ausgehend aus ihrer offenen in ihre geschlossene Funktionsstellung verschwenken, wodurch die freien Enden der Schenkel 50 bzw. 52 der Zusatzteile 38 bzw. 40 in die Hinterschnittbereiche 60 bzw. 62 eingeführt werden und eine formschlüssige Verbindung herstellen und gleichzeitig die ersten Kontaktierungsabschnitte 128, 130 in jeweilige Anlage mit den zweiten Kontaktierungsabschnitten 132, 134 bringen.

Im Zuge der Verschwenkung der Zusatzteile 38, 40 aus der offenen Funktionsstellung in die geschlossene Funktionsstellung bleibt der elektrische Kontakt zwischen den ersten Kontaktierungsabschnitten 128, 130 und den dritten Kontaktierungsabschnitten 136, 138 erhalten (vgl. Fig. 14a und 14b) .

Alternativ hierzu wird ein elektrischer Kontakt zwischen den ersten Kontaktierungsabschnitten 128, 130 und den dritten Kontaktierungsabschnitten 136, 138 nur in der geschlossenen Funktionsstellung der Zusatzteile 38, 40 hergestellt (vgl. Fig. 15b), während die freien Enden der ersten Kontaktierungsabschnitte 128, 130 in der offenen Funktionsstellung der Zusatzteile 38, 40 zu den Kontaktflächen 140, 142 der dritten Kontaktierungsabschnitte 136, 138 beabstandet sind.

Ein vorstehend unter Bezugnahme auf die Figuren 14a bis 15b beschriebener, im Zuge des Fügevorgangs der Bauteile 12 und 14 hergestellter elektrischer Kontaktschluss kann insbesondere bei einer beispielhaft unter Bezugnahme auf Fig. 12a und 12b beschriebenen Leuchtenbaugruppe vorteilhaft sein.

Es versteht sich, dass in allen beschriebenen Ausführungsformen ausgehend von dem jeweiligen Montagezustand, in welchem das mindestens eine Zusatzteil 38, 40 eine geschlossene Funktionsstellung einnimmt, das erste Bauteil 12 durch Beaufschlagung mit einer Demontagekraft, welche zu der Fügerichtung 64 entgegengesetzt orientiert ist, wieder von dem zweiten Bauteil 14 getrennt werden kann. Hierbei wird das mindestens eine Zusatzteil 38, 40 um das Schwenkgelenk 42, 44 ausgehend von der geschlossenen Funktionsstellung in die offene Funktionsstellung verschwenkt (in zu den Schwenkrichtungen 68, 70 jeweils entgegengesetzten Richtungen). Hierbei durchläuft das Zusatzteil 38, 40 auch die vorstehend beschriebene Totpunktstellung.

## Patentansprüche

1. Befestigungsanordnung (10), umfassend ein erstes Bauteil (12) und ein zweites Bauteil (14), wobei das erste Bauteil (12) wiederholbar lösbar an dem zweiten Bauteil (14) befestigbar ist, **gekennzeichnet durch** ein um ein Schwenkgelenk (42, 44) verschwenkbares Zusatzteil (38, 40), das zwischen einer offenen Funktionsstellung, in welcher ein Fügeabschnitt (16) des ersten Bauteils (12) mit einem Aufnahmeabschnitt (22) des zweiten Bauteils (14) fügbar ist, und einer geschlossenen Funktionsstellung, in welcher der Fügeabschnitt (16) des ersten Bauteils (12) in dem Aufnahmeabschnitt (22) des zweiten Bauteils (14) aufgenommen ist, verschwenkbar ist, wobei das Zusatzteil (38, 40) bei einer Überführung zwischen den Funktionsstellungen eine instabile Totpunktstellung durchläuft.

2. Befestigungsanordnung (10) nach Anspruch 1, **dadurch gekennzeichnet, dass** das Schwenkgelenk (42, 44) durch einen konvexen Gelenkabschnitt (34, 36) des Zusatzteils (38, 40) und einen konkaven, umfangsseitig offenen Gelenkabschnitt (30, 32) des zweiten Bauteils (14) gebildet ist, wobei die Gelenkabschnitte (34, 30; 36, 32) aneinander anliegen.

3. Befestigungsanordnung nach Anspruch 1 oder 2, **dadurch gekennzeichnet, dass** das Zusatzteil (38, 40) zwei zueinander winklig angeordnete Schenkel (46, 50; 48, 52) aufweist, dass das Schwenkgelenk (42, 44) in oder an einem Bereich angeordnet ist, der die beiden Schenkel (46, 50; 48, 52) miteinander verbindet und dass die Schenkel (46, 50; 48, 52) in einem entspannten Ruhezustand des Zusatzteils (38, 40) einen ersten Spreizwinkel (66) begrenzen und in mindestens einem Überführungszustand zwischen offener und geschlossener Funktionsstellung des Zusatzteils (38, 40) einen im Vergleich zu dem ersten Spreizwinkel (66) vergrößerten zweiten Spreizwinkel (72).

4. Befestigungsanordnung (10) nach Anspruch 3, **dadurch gekennzeichnet, dass** in der Totpunktstellung des Zusatzteils (38, 40) der Fügeabschnitt (16) des ersten Bauteils (12) an beiden Schenkeln des Zusatzteils (38, 40) anliegt.

5. Befestigungsanordnung (10) nach Anspruch 3 oder 4, **dadurch gekennzeichnet, dass** ein freies Ende eines Schenkels (50, 52) des Zusatzteils (38, 40) in der geschlossenen Funktionsstellung des Zusatzteils (38, 40) in einem Hinterschnittbereich (60, 62) des ersten Bauteils (12) und/oder des Fügeabschnitts (16) aufgenommen ist.

6. Befestigungsanordnung (10) nach Anspruch 5, **dadurch gekennzeichnet, dass** der Hinterschnittbereich (60, 62) zwischen einem Teilabschnitt einer dem zweiten Bauteil (14) zugewandten Begrenzungsfläche (18) des ersten Bauteils (12) und einem Aufweitungsabschnitt (56, 58) des Fügeabschnitts (16) angeordnet ist.

7. Befestigungsanordnung (10) nach einem der voranstehenden Ansprüche, **dadurch gekennzeichnet, dass** das zweite Bauteil (14) einen Anlageabschnitt, vorzugsweise in Form einer Begrenzungsfläche (24, 26) des Aufnahmeabschnitts (22), aufweist, welcher in der geschlossenen Funktionsstellung des Zusatzteils (38, 40) als Schwenkwegbegrenzung wirksam ist.

8. Befestigungsanordnung (10) nach einem der voranstehenden Ansprüche, **dadurch gekennzeichnet, dass** das zweite Bauteil (14) einen Anlageabschnitt, vorzugsweise in Form eines Anschlags (86, 88), aufweist, welcher in der offenen Funktionsstellung des Zusatzteils (38, 40) als Schwenkwegbegrenzung wirksam ist.

9. Befestigungsanordnung (10) nach einem der voranstehenden Ansprüche, **dadurch gekennzeichnet, dass** das zweite Bauteil (14) mindestens eine Halteeinrichtung (80) aufweist, welche eine Haltekraft (84) zum Halten des Zusatzteils (38, 40) in der offenen Funktionsstellung erzeugt.

10. Befestigungsanordnung (10) nach einem der voranstehenden Ansprüche, **dadurch gekennzeichnet, dass** genau ein Zusatzteil (38) vorgesehen ist.

11. Befestigungsanordnung (10) nach einem der Ansprüche 1 bis 9, **dadurch gekennzeichnet, dass** zwei Zusatzteile (38, 40) vorgesehen sind, welche zwischen ihren jeweiligen Funktionsstellungen jeweils in zueinander entgegengesetzten Schwenkrichtungen (68, 70) bewegbar sind.

12. Befestigungsanordnung (10) nach Anspruch 11, **dadurch gekennzeichnet, dass** die zwei Zusatzteile (38, 40) mittels eines Verbindungsabschnitts (90) miteinander verbunden sind.

13. Befestigungsanordnung (10) nach Anspruch 12, **dadurch gekennzeichnet, dass** die Totpunktstellung mit einer maximalen Stauchung oder Druckbelastung des Verbindungsabschnitts (90) einhergeht.

14. Befestigungsanordnung (10) nach Anspruch 12 oder 13, **dadurch gekennzeichnet, dass** ein die zwei Zusatzteile (38, 40) und den Verbindungsabschnitt (90) umfassender Verbund vorübergehend eine zum Einführen des Verbundes durch eine Eingriffsöffnung (122) in den Aufnahmeabschnitt (22) des zweiten Bauteils (14) erforderliche kompakte Einführkonfiguration einnimmt, in welcher der Verbindungsabschnitt (90) stark deformiert, insbesondere gebogen oder geknickt ist, insbesondere wobei der Verbindungsabschnitt (90) reversibel biegbar oder knickfähig ausgebildet ist.

15. Befestigungsanordnung (10) nach einem der voranstehenden Ansprüche, **dadurch gekennzeichnet, dass** das zweite Bauteil (14) eine Nutenleiste ist oder eine Nutenleiste aufweist.

16. Befestigungsanordnung (10) nach einem der voranstehenden Ansprüche, **dadurch gekennzeichnet, dass** das zweite Bauteil (14) eine Profilleiste zur dauerhaften Verbindung mit einer Windschutzscheibe eines Kraftfahrzeugs ist, insbesondere wobei das erste Bauteil (12) eine Wasserkastenabdeckung zur lösbaren Verbindung mit der Profilleiste ist.

17. Befestigungsanordnung (10) nach einem der Ansprüche 1 bis 15, **dadurch gekennzeichnet, dass** eines der Bauteile (12, 14) ein Leuchtengehäuse, eine Tragstruktur oder eine Tragschiene einer Leuchte und/oder dass eines der Bauteile (12, 14) eine Leuchtenabdeckung zur lösbaren Verbindung mit dem Leuchtengehäuse, der Tragstruktur oder der Tragschiene ist.

18. Befestigungsanordnung (10) nach einem der voranstehenden Ansprüche, **dadurch gekennzeichnet, dass** das Zusatzteil (38, 40) einen ersten elektrischen Kontaktierungsabschnitt (128, 130) aufweist, dass das erste Bauteil (12) oder das zweite Bauteil (14) einen zweiten elektrischen Kontaktierungsabschnitt (132, 134) aufweist, dass der erste Kontaktierungsabschnitt (128, 130) und der zweite Kontaktierungsabschnitt (132, 134) in der offenen Funktionsstellung des Zusatzteils (38, 40) elektrisch getrennt sind und dass der erste Kontaktierungsabschnitt (128, 130) und der zweite Kontaktierungsabschnitt (132, 134) in der geschlossenen Funktionsstellung des Zusatzteils (38, 40) eine elektrische Leitfunktion zwischen dem Zusatzteil (38, 40) und dem ersten Bauteil (12) oder dem zweiten Bauteil (14) bereitstellen.

19. Befestigungsanordnung (10) nach Anspruch 18, **dadurch gekennzeichnet, dass** das zweite Bauteil (14) oder das erste Bauteil (12) einen dritten Kontaktierungsabschnitt (136, 138) aufweist und dass der erste Kontaktierungsabschnitt (128, 130), der zweite Kontaktierungsabschnitt (132, 134) und der dritte Kontaktierungsabschnitt (136, 138) in der geschlossenen Funktionsstellung des Zusatzteils (38, 40) eine elektrische Leitfunktion zwischen dem ersten Bauteil (12), dem Zusatzteil (38, 40) und dem zweiten Bauteil (14) bereitstellen.

20. Befestigungsanordnung (10) nach einem der voranstehenden Ansprüche, **dadurch gekennzeichnet, dass** ausgehend von der offenen Funktionsstellung des Zusatzteils (38, 40) das erste Bauteil (12) mit dem Fügeabschnitt (16) längs einer Fügerichtung (64) und vorzugweise senkrecht zu noch zueinander beabstandeten Begrenzungsflächen (18) des ersten Bauteils (12) und (20) des zweiten Bauteils (14) in Richtung des Aufnahmeabschnitts (22) des zweiten Bauteils (14) bewegbar ist.

21. Befestigungsanordnung (10) nach Anspruch 20, **dadurch gekennzeichnet, dass** ausgehend von einem Montagezustand des ersten Bauteils (12) und des zweiten Bauteils (14), in welchem das mindestens eine Zusatzteil (38, 40) seine geschlossene Funktionsstellung einnimmt, das erste Bauteil (12) durch Beaufschlagung mit einer Demontagekraft, welche zu der Fügerichtung (64) entgegengesetzt orientiert ist, von dem zweiten Bauteil (14) trennbar ist.

22. Befestigungsanordnung (10) nach einem der voranstehenden Ansprüche, **dadurch gekennzeichnet, dass** der Fügeabschnitt (16) des ersten Bauteils (12) von einer Begrenzungsfläche (18) des ersten Bauteils (12) hervorspringt, die dem zweiten Bauteil (14) zugewandt ist.

23. Befestigungsanordnung (10) nach einem der voranstehenden Ansprüche, **dadurch gekennzeichnet, dass** das zweite Bauteil (14) eine dem ersten Bauteil (12) zugewandte Begrenzungsfläche (20) aufweist, wobei der Aufnahmeabschnitt (22) ausgehend von der Begrenzungsfläche (20) des zweiten Bauteils (14) in Form einer Ausnehmung gebildet ist.

24. Befestigungsanordnung (10) nach Anspruch 23 bei Rückbezug auf Anspruch 22, **dadurch gekennzeichnet, dass** die Begrenzungsflächen (18) und (20) in einem Montagezustand des ersten Bauteils (12) und des zweiten Bauteils (14), in welchem das mindestens eine Zusatzteil (38, 40) seine geschlossene Funktionsstellung einnimmt, zueinander parallel sind und/oder aneinander anliegen.
